(19) Europäisches Patentamt
European Patent Office
Office européen des brevets

(11) Publication number: **0 217 005**
**B1**

# (12) EUROPEAN PATENT SPECIFICATION

(45) Date of publication of patent specification: **05.09.90**

(51) Int. Cl.$^5$: **C 08 G 59/16**, C 08 F 283/10, C 08 L 63/10, C 09 D 163/10, C 09 J 163/10

(21) Application number: **86108870.6**

(22) Date of filing: **23.12.81**

(60) Publication number of the earlier application in accordance with Art. 76 EPC: **0 055 477**

## (54) Aqueous dispersion compositions.

(30) Priority: **23.12.80 JP 182669/80**
**24.02.81 JP 24854/81**
**24.02.81 JP 24855/81**

(43) Date of publication of application:
**08.04.87 Bulletin 87/15**

(45) Publication of the grant of the patent:
**05.09.90 Bulletin 90/36**

(84) Designated Contracting States:
**AT BE CH DE FR GB IT LI LU NL SE**

(56) References cited:
**EP-A-0 008 837**
**DE-B-1 520 429**
**FR-A-1 583 225**
**FR-A-2 343 005**
**GB-A-1 165 623**
**US-A-3 316 195**
**US-A-4 212 776**

(73) Proprietor: **Asahi Kasei Kogyo Kabushiki Kaisha**
**2-6, Dojimahama 1-chome Kita-ku**
**Osaka-shi Osaka 530 (JP)**

(72) Inventor: **Ishimura, Hidekazu**
**No. 173, Hoshiyama 85, Fujinomiya-shi**
**Shizuoka (JP)**
Inventor: **Kakutani, Yoshimi**
**Endo Apartment B-43, Aoshima 68, Fuji-shi**
**Shizuoka (JP)**
Inventor: **Aoyagi, Naohisa**
**Asahi Kei Nishi Apartment 424**
**100, Kawanarijima, Fuji-shi Shizuoka (JP)**

(74) Representative: **Strehl, Schübel-Hopf, Groening**
**Maximilianstrasse 54 Postfach 22 14 55**
**D-8000 München 22 (DE)**

**EP 0 217 005 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Courier Press, Leamington Spa, England.

## Description

The present invention relates to aqueous resin compositions having excellent properties as a basic composition for the preparation of paints, adhesives, and so forth.

In recent years, aqueous polymer dispersions prepared by emulsion polymerization, for example, of acrylonitrile-styrene, vinyl acetate, ethylene-vinyl acetate, and the like have been increasingly used as paints, adhesives, and so forth. These conventional aqueous polymer dispersions, however, have a serious problem in that they can only provide coating films which exhibit poor adhesion to metals, wood, cement-hardened products, plastics and so forth, and which are often subject to peeling and blistering, particularly under wet conditions or at high temperatures. There were several attempts to solve the problem, such as reducing the amount of water-sensitive substances, e.g., surface active agents and protective colloids, contained in the aqueous polymer dispersion, and formation of a cross-linked structure by the introduction of functional groups into the polymer skeleton (see U.S. Patents 3,991,216, 4,065,415, 4,065,416 and 4,097,438), but with insufficient effects.

In addition, an attempt to improve the water resistance of coating films by addition of thermosetting resins, such as epoxy resins, in combination has been made (see Japanese Patent Application (OPI) No. 78237/78) (the term "OPI" as used herein refers to a "published unexamined Japanese patent application"). This method, however, suffers from disadvantages in that the epoxy resin separates from the polymer component during storage, coating films obtained become turbid, and the water resistance of the coating film is insufficiently improved.

In order to overcome the above-described defects, Japanese Patent Application (OPI) No. 1228/78, for example, discloses a method in which an epoxy resin is grafted onto a carboxy group-containing acryl polymer to prepare a graft copolymer having a self-emulsification capability, and the graft copolymer is dispersed in water. This method also suffers from disadvantages in that the graft efficiency is poor, and therefore the grain size of the graft copolymer to be dispersed in water is large, making it difficult to control the flow and extension of the resultant dispersion product. Furthermore, the water dispersion stability is poor unless the ionization ratio of the carboxy group is high.

It has therefore been desired to develop aqueous dispersion compositions which overcome the above-described defects of the prior art technique, and provide coating films having excellent water resistance, solvent resistance, and physical properties.

Industrial adhesives which are now widely used are generally thermosetting resin-based and emulsion-based adhesives. Non-solvent type adhesives have also been used for a long time. Adhesives prepared using chloroprene rubber as a starting material are almost all solvent type adhesives, and therefore, in view of safety and sanitation, it is strongly desired to produce aqueous chloroprene rubber-based adhesives.

Solvent type adhesives prepared using chloroprene rubber have advantages in that the contact properties are good, the initial adhesive force is strong (because of high crystallinity), and the heat resistance and water resistance are good. Thus, they have many uses, for example, in wood-working and automobile production. Emulsion type adhesives are inferior in the initial adhesive force, heat resistance, and water resistance compared to the solvent type adhesives. In order to overcome these defects, therefore, various proposals have been made, but satisfactory adhesives have not yet been obtained.

### Summary of the Invention

The principal object of the invention is to provide aqueous dispersion compositions which have good storage stability, can be easily controlled in the flow and extension properties thereof when applied to an article to be coated since the particle size of the emulsion can be freely controlled, and which can provide a uniform coating film having good water resistance, heat resistance, and adhesive force.

Subject matter of the present invention is an aqueous dispersion composition comprising:

(I) an aqueous dispersion which is prepared by:

(1) uniformly mixing (a) a mixture of aromatic compounds having epoxy groups and acryloyl and/or methacryloyl groups, said mixture containing an average of at least 0.5 epoxy group and an average of from 0.1 to 1.5 acryloyl and/or methylacryloyl groups per molecule, and (b) at least one ethylenic monomer, and then

(2) emulsion polymerizing the mixture in the presence of a surface active agent; and

(II) a room temperature-hardening type hardener which can undergo the hardening at room temperature, selected from polyamine-based hardeners and polysulfide-based hardeners.

According to one embodiment of this invention the aqueous dispersion composition comprises further

(III) at least one resin selected from the group consisting of a phenol resin, a terpene resin, a rosin gum, a rosin ester resin, and a xylene resin.

A still further embodiment of this invention relates to an aqueous dispersion composition which comprises additionally

(IV) a nitrile-butadiene rubber.

The present invention also relates to a process for producing either of the above defined compositions.

Some of the major advantages of the aqueous dispersion composition of the invention are as follows:

(1) It can provide a coating film having excellent water resistance, heat resistance, and adhesiveness

compared with conventional aqueous dispersions, exemplified by an acryl-based dispersion.

(2) It has excellent storage stability compared with conventional aqueous dispersions, such as an epoxy resin-based aqueous dispersion and an epoxy resin-acryl resin-based dispersion.

(3) It can provide a transparent coating film having improved water resistance.

(4) Since the particle size at the time of being dispersed in water is small, it is easy to control the flow and extension properties of the dispersion when applied to an article to be coated.

(5) The water dispersion stability is good even though the ionization ratio of the carboxy group is low.

(6) It can provide a coating film having a good initial adhesive force, i.e., good contact properties.

(7) With the lapse of time, the cross-linking reaction between the epoxy group and hardener remaining in the dispersion proceeds, providing higher adhesive force, and heat resistance and water resistance which are higher than those of conventional chloroprene-based adhesives.

Hereinafter the invention will be explained in more detail.

A mixture containing an average of at least 0.5 epoxy groups and an average of from 0.1 to 1.5 acryloyl and methacryloyl groups per molecule which can be used in the invention is composed of aromatic compounds having epoxy groups and acryloyl and/or methacryloyl groups (hereinafter these aromatic compounds are referred to be "polymerizable epoxy compounds"), and includes, for example, epoxy acrylate or epoxy methacrylate mixtures resulting from the reaction of aromatic epoxy resins and acrylic or methacrylic acid or derivatives thereof.

Examples of aromatic epoxy resins are condensates of polyhydric phenols (such as dihydric phenols, e.g., catechol, resorcin, hydroquinone, bisphenol A, etc., and trihydric phenols, e.g., pyrogallol, phoroglucin, hydroxyhydroquinone, etc.) and epihalohydrin. Most typical is the condensate of bisphenol A and epicholorhydrin.

When the epoxy group content is less than 0.5 per molecule, the water resistance, heat resistance, and adhesiveness of the coating film formed therefrom are poor.

When the acryloyl or methacryloyl group content is less than 0.1, the storage stability is poor and the coating film formed is turbid. On the other hand, when it is more than 1.5, gelation occurs during preparation of the desired polymer. This is not suitable for practical use. The number of acryloyl or methacryloyl groups per molecule is particularly important. As the number is increased, the particle size of the aqueous dispersion is reduced, and the aqueous dispersion is stabilized, whereas the viscosity of the polymer is increased, finally resulting in gelation. Preferably, the number of acryloyl or methacryloyl groups per molecule is from 0.4 to 0.8.

The epoxy group content and the acryloyl or methacryloyl group content can be measured by the perchloric acid method as described in, for example, Hashimoto, *Epoxy Resins*, p. 52, published by Nikkan Kogyo Shinbunsha, and the pyridine dibromosulfate method as described in, for example *Kobunshi Jikkengaku Koza No. 9*, p. 128; respectively.

The epoxy equivalent of the mixture of the polymerizable epoxy compounds is not critical, and it is usually within the range of from 100 to 10,000, preferably from 100 to 2,000.

Ethylenic monomers which can be used in the invention include besides acrylic acid and methacrylic acid, alkyl acrylates such as methyl acrylate, ethyl acrylate, propyl acrylate, butyl acrylate and 2-ethylhexyl acrylate, alkyl methacrylates corresponding to the above alkyl acrylates, aromatic vinyl compounds such as styrene, α-methylstyrene and vinyltoluene, mono- or di-esters of α,β-ethylenically unsaturated dicarboxylic acids such as mono- or dibutyl maleate and mono- or di-octyl fumarate, vinyl esters such as vinyl acetate and vinyl propionate, vinyl ethers, unsaturated nitriles such as acrylonitrile and methacrylonitrile, olefins such as ethylene, butadiene and isoprene, and chlorine-containing vinyl compounds such as vinyl chloride, vinylidene chloride and chloroprene.

These ethylenic monomers can be used, if desired, in combination with functional or cross-linkable monomers. Examples of such functional or cross-linkable monomers include hydroxy group-containing monomers such as 2-hydroxyethyl acrylate, 2-hydroxyethyl methacrylate and polyethylene glycol monomethacrylate, amido group-containing monomers such as acrylamide and methacrylamide, methylol group-containing monomers such as N-methylol acrylamide and dimethylol acrylamide, alkoxymethyl group-containing monomers such as N-butoxymethyl acrylamide; epoxy group-containing monomers such as glycidyl acrylate and glycidyl methacrylate, and divinyl monomers such as divinylbenzene, polyoxyethylene diacrylate and polyoxyethylene dimethacrylate.

Preferably, acrylic acid or methacrylic acid comprises from about 1% to 60% by weight of the total ethylenic monomer content. This acrylic acid or methacrylic acid can provide water dispersibility due to carboxy anions which are obtained by the neutralization thereof, and provides the carboxyl group, which is used for the cross-linking reaction with the residual epoxy group.

The ratio of the mixture of polymerizable epoxy compounds to the ethylenic monomer can be easily determined, depending on the particular properties desired. Preferably from 10 to 90 parts by weight of the mixture of polymerizable epoxy compounds is added to from 90 to 10 parts by weight of the ethylenic monomer.

The aqueous dispersion of the invention can be prepared by mixing uniformly (a) the mixture of polymerizable epoxy compounds and (b) the ethylenic monomer, and polymerizing by addition of a polymerization initiator, and, if necessary, other additives such as a surface active agent and an organic solvent.

The mixture of (a) and (b) is polymerized by emulsion polymerization.

Polymerization initiators which can be used include peroxides, persulfates, azobis compounds, and redox systems thereof with reducing agents such as iron (II) or chromium ion, sulfites and hydrazine.

For the emulsion polymerization, a surface active agent, a dispersant, a protective colloid, water, and a polymerization initiator are added to (a) and (b) to prepare an emulsified dispersion, and then, emulsion polymerization is performed. Surface active agents, dispersants, and protective colloids which can be used include aliphatic soaps, alkyl sulfate salts, alkylbenzenesulfonate salts, dialkylsulfosuccinate salts, alkyl phosphate salts, polyoxyethylene alkyl ethers, polyoxyethylene alkylphenol ethers, polyoxyethylene aliphatic acid esters, sorbitan aliphatic acid esters, polyoxyethylene sorbitan aliphatic acid esters, glycerin aliphatic acid esters, oxyethylene-oxypropylene block copolymers, alkylamine salts, polyphosphoric acid salts, polyacrylic acid salts, maleic anhydride copolymer salts, polyvinyl alcohol, and hydroxyethyl cellulose.

Polymerization initiators for the ethylenic monomers which can be used include, for example, persulfate salts, peroxides, azobis compounds and redox systems thereof with reducing agents. If necessary, pH adjustors, such as sodium hydrogenphosphate and sodium hydrogencarbonate, and organic solvents are added.

The polymerization method is performed by addition of the above-described polymerization initiator. It is preferred to maintain the polymerization temperature within the range of from 70°C to 100°C. At temperatures lower than 70°C, the polymerization time is too long, whereas at temperatures higher than 100°C, gelation may occur during the polymerization.

A basic compound is added to the polymer in such an amount as to neutralize, partially or entirely, the carboxyl groups contained therein, and uniformly mixed with stirring. Thereafter, a predetermined amount of water is added to the mixture. For instance, the water is added such that viscosity of the water-dispersion is from 0.1 to 10 Pa.s (100 to 10,000 cps) for the purpose of adhesives.

Basic compounds which can be used for the neutralization include amines such as monoethylamine, monoethylamine, dimethylamine, diethylamine, trimethylamine, triethylamine, monomethanolamine, dimethanolamine, trimethanolamine and dimethylaminoethanol, and inorganic basic compounds such as caustic soda and caustic potash.

In the aqueous dispersion composition of the invention, it is necessary that the epoxy group remains therein in an amount sufficient to cause the cross-linking reaction.

Addition of cross-linking agents, i.e., compounds having functional groups capable of reacting with an epoxy group or alcoholic hydroxy groups resulting from the reaction of the epoxy group, to the aqueous dispersion composition of the invention provides a good coating film.

Under drying conditions of from room temperature to 80°C, amine compounds are particularly effective. Suitable examples of such amine compounds are polyamines which are known as hardeners for epoxy resins, such as aliphatic polyamines, e.g., ethylenediamine, diethylenetriamine and triethylenetetramine, alicyclic polyamines, e.g., isophoronediamine, methandiamine and N-aminoethylpiperidine, aromatic amines, e.g., xylylenediamine, phenylenediamine, diaminodiphenylmethane and diaminodiphenylsulfone, heterocyclic ring-containing polyamines, modified polyamines prepared from the above polyamines, polyamidopolyamines synthesized from natural or synthetic dicarboxylic acids and polyamines such as ethylenediamine, tertiary amine-containing compounds, e.g., dimethylbenzylamine and 2,4,6-tridimethylaminoethylphenol, imidazoles, and dicyandiamides. Further, polysulfide-based hardeners are effectively used alone or in combination with the polyamine-based hardeners, such as those having the structure,

$$HS\text{-}(C_2H_4\text{—}O\text{—}CH_2\text{—}O\text{—}C_2H_4\text{—}S\text{—}S)_n\text{—}C_2H_4\text{—}O\text{—}CH_2\text{—}O\text{—}C_2H_4\text{—}SH \quad (n = 2 \text{ to } 10)$$

The polyamine-based hardeners or polysulfide-based hardeners are preferably added in such an amount that the active hydrogen (i.e., the hydrogen bonded to nitrogen or sulfur atom) of the hardener is from 0.1 to 2.0 equivalents per equivalent of epoxy group in the aqueous dispersion of the present invention. When it is less than 0.1 equivalent, sufficient adhesive strength cannot be obtained, and when it is more than 2.0 equivalents, water resistance deteriorates.

The solids content of the aqueous dispersion composition of the invention can be increased up to about 80% by weight. In view of quality and productivity, however, it is preferred that the solids content is from about 15 to 60% by weight.

To the aqueous dispersion composition of the invention there can be added a bulk filler, a reinforcing agent, a filler, and a pigment, depending on the particular purposes for which it is to be used. Examples of such additives include coal tar, glass fiber, asbestos fiber, boron fiber, carbon fiber, cellulose, polyethylene powder, polypropylene powder, quartz powder, mineral silicates, e.g., mica, asbestos powder and slate powder, kaolin, aluminum oxide, trihydrate, aluminum hydroxide, chalk powder, gypsum, calcium carbonate, antimony trioxide, bentone, silica aerosol, lithopone, baryta, titanium dioxide, carbon black, graphite, oxide colored pigments, e.g., iron oxide, and metal powders, e.g., aluminum powder and iron powder.

Where a high initial adhesive force is required, a tackifier, e.g., a phenol resin, a terpene resin, a rosin gum, a rosin ester resin, and a xylene resin, can be added to the aqueous dispersion composition in order

to improve the contact properties thereof. Preferably, the tackifier is added in the form of an aqueous dispersion or aqueous solution. The amount of the tackifier added is preferably from 5 to 100 parts by weight per 100 parts by weight of the total weight of the polymer of ethylenic monomers and the epoxy compound.

In order to improve the adhesive force of the aqueous dispersion composition to glass, etc., silane-based compounds, such as vinyltriethoxysilane and β-(2,4-epoxycyclohexyl)ethyltrimethoxysilane, can be added thereto.

The aqueous dispersion composition of the invention can be used as a paint varnish for the dispersion of pigments, a clear paint for metallic articles exemplified by a can, a colored paint in which pigment is used in combination therewith, a wall spraying material, a floor material, a paint for coating a swimming pool, an aqueous emulsion paint, exemplified by a road paint, or similar coating materials, a print ink composition, or a fiber-processing agent. In addition, the aqueous dispersion composition can be used to bond wood, plywood, particle board, gypsum board, metals, e.g., iron and aluminum, plastic films, plastic molds, leather, cloth, e.g., cotton and flax, glass fiber, glass cloth, and fiber reinforced plastics (FRP), to one another or to different products.

Illustrative formulations of the aqueous dispersion composition are given below.

| | Formulation for Adhesives |
|---|---|
| *(a) Mixture of Aromatic Compound* | A.E.R.-330*/Methacrylic Acid (molar ratio: 1/0.4—1/0.05) |
| Average Epoxy Content | 1.6—1.95 |
| Average (Meth)acryloyl Content | 0.1—0.4 |
| Epoxy Equivalent | 190—400 |
| Amount of (a) | 20—80 (parts) |
| *(b) Ethylenic Monomer* | |
| Styrene | 0—50 (%) ** |
| Methacrylic Acid | 1—10 (%) |
| Methyl Methacrylate | 1—80 (%) |
| Ethyl Acrylate | None |
| n-Butyl Acrylate | 1—80 (%) |
| 2-Ethylhexyl Acrylate | 1—80 (%) |
| Amount of (b) | 80—20 (parts) |
| *Polymerization* | Emulsion Polymerization in the Presence of Nonionic or Anionic Surface Active Agents |
| *Hardener* | Imidazoles |
| *Basic Compound* | None |
| *Tackifier* | Aqueous Dispersion of Phenol Resins |
| *Water Added* | No Need |

Note: * A.E.R.-330 is an epoxy resin produced by Asahi Kasei Kogyo Kabushiki Kaisha.
** Based on the total amount of the ethylenic monomers.

The following examples are given to illustrate the invention in greater detail. All parts and percents (%) are by weight.

Preparation Example 1

Synthesis of Polymerizable Epoxy Group-Containing Compound Mixtures B and C

Ninety five parts of a bisphenol A type epoxy resin A.E.R.-664 (produced by Asahi Kasei Kogyo Kabushiki Kaisha (hereafter "Asahi Kasei")) having an epoxy equivalent of 950 was dissolved in 40 parts of ethyl cellosolve. Then, 0.02 part of sodium hydroxide (NaOH) was added to the solution along with 1 part of water, and the temperature of the resulting mixture was raised to 120°C. Subsequently, 17.2 parts of methacrylic acid was added to the mixture over a period of about 2 hours, and the temperature was maintained at 120 to 130°C.

The reaction product was a mixture of compounds having an average of one epoxy group and one methacryloyl group in the molecule and the epoxy equivalent of 1,000. This is called "Polymerizable Epoxy Group-Containing Compound Mixture B".

Polymerizable Epoxy Group-Containing Compound Mixture C was prepared in the same manner, except that the amount of methacrylic acid added was changed to 60.2 parts.

Polymerizable Epoxy Group-Containing Compound B had an average of 1.6 epoxy groups and 0.4 methacryloyl groups per molecule and the epoxy equivalent of 1,210, and Polymerizable Epoxy Group-Containing Compound Mixture C, an average of 0.6 epoxy groups and 1.4 methacryloyl groups per molecule and the epoxy equivalent of 6,700.

Preparation Example 2

Synthesis of Polymerizable Epoxy Group-Containing Compound Mixture G

To 19.5 parts of a bisphenol A type epoxy resin A.E.R.-331 (produced by Asahi Kasei) having an epoxy equivalent of 190 was added 0.5 part of NaOH together with 1 part of water, and the mixture was heated up to 120°C. Then, 1.7 parts of methacrylic acid was added to the mixture over a period of 1 hour, and the temperature of the resulting mixture was maintained at 120 to 130°C. When the acid value reached 1 or less, the reaction was stopped.

The thus-prepared compound had an average of 1.6 epoxy groups and 0.4 methacryloyl groups per molecule and the epoxy equivalent of 260. This compound was designated as "Polymerizable Epoxy Group-Containing Compound Mixture G".

Example 1

| | Parts |
|---|---|
| Polymerizable Epoxy Group-Containing Compound Mixture G | 50 |
| Styrene | 20 |
| n-Butyl acrylate | 20 |
| Methyl methacrylate | 10 |
| Polyoxyethylene lauryl ether (Hydrophilic-Lipophilic Balance (HLB): 17.5) | 2 |
| Sodium dicyclohexylsulfosuccinate | 2 |
| Ammonium persulfate | 2 |
| Desalted water | 50 |
| Total | 156 |

These polymerizable ingredients were mixed to prepare a polymerizable mixed monomer emulsion.

A solution of 1 part of a polymerization initiator, ammonium persulfate (hereinafter referred to as "APS") in 50 parts of desalted water was heated up to 70°C. To the aqueous solution there was added dropwise the above-prepared mixed emulsion over a period of about 2 hours while maintaining the temperature at from 70°C to 75°C. After the dropwise addition was completed, the resulting mixture was maintained at the above temperature for 2 hours. Then, 2 parts of APS was added thereto, and the mixture was heated up to from 80°C to 85°C and maintained at the temperature for 2 hours.

The thus-prepared aqueous dispersion was a milk white emulsion having an average grain size of 0.2 μm, a pH of 6.1, and a viscosity (as determined with Model B viscometer) of 0.2 Pa.s (200 cps). When the aqueous dispersion was subjected to a stability test by allowing it to stand at 50°C for 3 months, no deterioration was observed.

Then, 2 parts of diethylenetriamine (hereinafter referred to as "DETA") was added to the above-prepared aqueous dispersion and mixed uniformly. The mixture thus-prepared was coated on a mild steel plate in a dry thickness of 100 μm and dried at room temperature for 1 week to provide a coating film. The characteristics of the coating film were as follows:

Surface state of coating film: Uniform and transparent.
Erichsen cupping (DIN 53,156): 8 mm or more.
Dupont impact value: 500 g, 12.7 mm (½ inch), 50 cm or more.
Cross-cut adhesion: 100/100.
Cross-cut adhesion after soaking in water at 25°C for 1 week: 100/100.

## Comparative Example 1

An aqueous dispersion was prepared in the same manner as in Example 1 except that an unmodified epoxy resin A.E.R.-331 was used in place of Polymerizable Epoxy Group-Containing Compound Mixture G.

The thus-prepared aqueous dispersion was a white emulsion having an average grain size of 0.5 μm, a pH of 6.2, and a viscosity of 0.1 Pa.s (100 cps). When the aqueous dispersion was subjected to a stability test by allowing it to stand at 50°C, separation occurred in about 3 weeks.

Immediately after the preparation of the aqueous dispersion, 3 parts of DETA was added to the aqueous dispersion and uniformly mixed. The mixture was coated on a mild steel plate to obtain a coating film having a dry thickness of 100 μm. The characteristics of the coating film are as follows:

Surface state of coating film: Turbid.
Erichsen cupping: 8 mm or more.
Dupont impact value: 500 g, 12.7 mm (½ inch), 50 cm or more.
Cross-cut adhesion: 100/100.
Cross-cut adhesion after soaking in water at 25°C for 1 week: 0/100.

## Examples 2 to 4

Polymerizable mixed monomer emulsions having the compositions shown in Table 1 were prepared.

A solution of 1 part of potassium persulfate (hereinafter referred to as "KPS") in 50 parts of desalted water was heated up to 80°C. To the aqueous solutions there was added dropwise each polymerizable mixed monomer emulsion as prepared above, over a period of about 2 hours. After the dropwise addition was completed, the temperature was maintained at 80°C for about 3 hours. Then, 2 parts of KPS was added to the mixture, and the reaction was continued for 2 hours.

All of the thus-prepared aqueous dispersions were milk white stable emulsions.

TABLE 1

| | Example No. | | |
|---|---|---|---|
| | 2 | 3 | 4 |
| Polymerizable Epoxy Group-Containing Compound Mixture G | 70 | 30 | 50 |
| Styrene | 10 | 20 | 20 |
| n-Butyl acrylate | 10 | 20 | 20 |
| Methyl methacrylate | 5 | 20 | — |
| Acrylamide | 2 | 2 | — |
| Methacrylic acid | 3 | 8 | 10 |
| Polyoxyethylene lauryl ether (HLB = 17.5) | 2 | 2 | — |
| Sodium dicyclohexylsulfosuccinate | 2 | 2 | 2 |
| Propylene oxide-ethylene oxide block copolymer | — | — | 2 |
| KPS (HLB = 16.3) | 1 | 1 | 1 |
| Desalted water | 51 | 51 | 51 |

Example 5

To 100 parts of each aqueous dispersion prepared in Examples 2 to 4 were added 20 parts of $TiO_2$ (rutile), 15 parts of talc, 15 parts of coal powder, and 5 parts of ethyl cellosolve to prepare a uniform dispersion. Then, a polyamidoamine-based hardener, Sunmide S17—02 (produced by Sanwa Chemical Co., Ltd.) was added to the dispersion and mixed. Each mixture thus-prepared was coated on a slate plate to obtain a layer having a dry thickness of 500 μm.

It took 3 hours for each coating film to dry to the touch. After one day, the coating film was dried sufficiently, and the cross-cut adhesion was 100/100. After the coating film was soaked in water at 25°C for 10 days, the cross-cut adhesion was again examined, and it was found that the cross-cut adhesion was still 100/100 and the coating film had a sufficient adhesion force.

Examples 6 and 7

Using the compositions shown in Table 2, the corresponding aqueous dispersions were prepared in the same manner as in Example 1.

TABLE 2

| | Example 6 | Example 7 |
|---|---|---|
| Polymerizable Epoxy Group-Containing Compound Mixture B | 50 | 0 |
| Polymerizable Epoxy Group-Containing Compound Mixture C | 0 | 50 |
| Styrene | 20 | 20 |
| n-Butyl acrylate | 20 | 20 |
| 2-Hydroxyethyl acrylate | 10 | 10 |
| Polyoxyethylene lauryl ether (HLB = 17.5) | 2 | 2 |
| APS | 1 | 1 |
| Desalted Water | 51 | 51 |

All the aqueous dispersions were milk white and stable emulsions.

Example 8

To 200 parts of the aqueous dispersion prepared in Example 1 was added 6 parts of triethylenetetramine (hereinafter referred to as "TETA") as a hardener and mixed uniformly to prepare a contact adhesive. The pot-life of the adhesive was 4 hours.

The thus-prepared adhesive was coated on two plywood sheets in a dry thickness of 30 µm and was allowed to stand for 10 minutes. At the end of that time, the two plywood sheets were bonded together under a pressure of 3 bar ($kg/cm^2$) for about 5 seconds.

The tensile shear adhesion strength just after bonding was measured and found to be 5 bar ($kg/cm^2$) (green strength).

After the bonding, the adhesion strength increased with the lapse of time. The tensile shear adhesion strength after about one day was 40 $kg/cm^2$ (400 $N/cm^2$).

Example 9

To 200 parts of the emulsion polymer prepared in Example 1 were added 50 parts of an aqueous phenol resin dispersion (non-volatile content 50%; produced by Showa Union Co., Ltd.) and 3 parts of 2-ethyl-4-methyl-imidazole as a hardener to prepare a contact adhesive. The pot-life of the adhesive was 40 hours or more.

The adhesive was coated on an asbestos slate and a cotton canvas to obtain a dry thickness in each case of 30 µm and was allowed to stand for 5 minutes. At the end of that time, the asbestos slate and the cotton canvas were bonded together under a pressure of 1 bar ($kg/cm^2$) for about 2 seconds, and the green strength was 10 bar ($kg/cm^2$).

Example 10

| | Parts |
|---|---|
| Styrene | 10 |
| n-Butyl acrylate | 20 |
| Methyl methacrylate | 10 |
| Polyoxyethylene lauryl ether (HLB = 18.1) | 2 |
| Sodium dicyclohexylsulfosuccinate | 2 |
| Ammonium persulfate | 2 |
| Polymerizable Epoxy Group-Containing Compound Mixture G | 50 |
| Hycar CTBN 1300 × 13 (nitrile-butadiene rubber having a molecular weight of 3,500, produced by Ube Industries Ltd.) | 10 |
| Desalted water | 30 |

These ingredients were mixed to prepare a polymerizable emulsion.

The polymerizable emulsion was subjected to emulsion polymerisation in the same manner as in Example 1 to prepare an emulsion polymer. The average grain size of the emulsion polymer was 0.1 μm, and it was stable for 30 days at 40°C.

To 200 parts of the emulsion polymer there was added 2 parts of TETA and mixed uniformly to prepare a contact adhesive. The pot-life of the adhesive was 12 hours.

**Claims for the Contracting States: BE CH DE FR GB IT LI LU NL SE**

1. An aqueous dispersion composition comprising:

(I) an aqueous dispersion which is prepared by:

(1) uniformly mixing (a) a mixture of aromatic compounds having epoxy groups and acryloyl and/or methacryloyl groups, said mixture containing an average of at least 0.5 epoxy group and an average of from 0.1 to 1.5 acryloyl and/or methacryloyl groups per molecule, and (b) at least one ethylenic monomer, and then

(2) emulsion polymerizing the mixture in the presence of a surface active agent; and

(II) a room temperature-hardening type hardener which can undergo the hardening at room temperature, selected from polyamine-based hardeners and polysulfide-based hardeners.

2. An aqueous dispersion composition according to claim 1, additionally comprising (III) at least one resin selected from the group consisting of a phenol resin, a terpene resin, a rosin gum, a rosin ester resin, and a xylene resin.

3. An aqueous dispersion composition according to claim 2, wherein the comonomer (b) of component (I) comprises at least one alkyl acrylate or methacrylate and optionally, other ethylenic monomers, and wherein said emulsion polymerisation of the mixture is carried out in the presence of a nonionic or anionic surface active agent; said aqueous dispersion composition comprising as a further component (IV) a nitrile-butadiene rubber.

4. A composition as in any of claims 1 to 3, wherein (b) contains acrylic acid or methyacrylic acid.

5. A composition as in any of claims 1 to 4, wherein (a) is prepared by reacting an aromatic epoxy resin with at least one of acrylic acid and methacrylic acid.

6. A composition as in any of claims 1 to 5, wherein (a) is derived from a condensate of bisphenol A and epichlorohydrin.

7. A composition as in any of claims 1 to 6, wherein the weight ratio of (a) and (b) is 90/10 to 10/90.

8. A composition as in claim 1, 2 or 3, wherein the polyamine-based hardener is added in such an amount that the active hydrogen of the polyamine-based hardener is from 0.1 to 2.0 equivalents per equivalent of epoxy group in the aqueous dispersion (I).

9. A composition as in claim 1, 2 or 3, wherein the mixture of aromatic compounds has an average of from 0.4 to 0.8 acryloyl or methacryloyl groups per molecule.

10. A composition as in claim 1, 2 or 3, wherein the ethylenic monomer contains about 1% to 60% by weight of acrylic acid or methyacrylic acid.

11. The use of a composition as claimed in any of the claims 1 to 10 for preparing a coating or as an adhesive.

**Claims for the Contracting State: AT**

1. A process for preparing an aqueous dispersion composition comprising the steps of:

(1) uniformly mixing (a) a mixture of aromatic compounds having epoxy groups and acryloyl and/or methacryloyl groups, said mixture containing an average of at least 0.5 epoxy group and an average of from 0.1 to 1.5 acryloyl and/or methacryloyl groups per molecule, and (b) at least one ethylenic monomer, and then

(2) emulsion polymerizing the mixture in the presence of a surface active agent to obtain an aqueous dispersion (I) and adding thereto (II) a room temperature-hardening type hardener which can undergo the hardening at room temperature, selected from polyamine-based hardeners and polysulfide-based hardeners.

2. A process for preparing an aqueous dispersion composition according to claim 1, which comprises adding to the aqueous dispersion (I), further to the hardener (II), (III) at least one resin selected from the group consisting of a phenol resin, a terpene resin, a rosin gum, a rosin ester resin, and a xylene resin.

3. A process according to claim 2, which comprises further adding (IV) a nitrile-butadiene rubber to the aqueous dispersion (I).

4. A process as in any of claims 1 to 3, wherein (b) contains acrylic acid or methyacrylic acid.

5. A process as in any of claims 1 to 4, wherein (a) is prepared by reacting an aromatic epoxy resin with at least one of acrylic acid and methacrylic acid.

6. A process as in any of claims 1 to 5, wherein (a) is a condensate of bisphenol A and epichlorohydrin.

7. A process as in any of claims 1 to 6, wherein the weight ratio of (a) to (b) is 90/10 to 10/90.

8. A process as in claim 1, 2 or 3, wherein the polyamine-based hardener is added in such an amount that the active hydrogen of the polyamine-based hardener is from 0.1 to 2.0 equivalents per equivalent of epoxy group in the aqueous dispersion (I).

9. A process as in claim 1, 2 or 3, wherein the mixture of aromatic compounds has an average of from 0.4 to 0.8 acryloyl or methacryloyl groups per molecule.

10. A process as in claim 1, 2 or 3, wherein the ethylenic monomer contains about 1% to 60% by weight of acrylic acid or methacrylic acid.

11. The use of a composition as prepared by the process of any of the claims 1 to 10 for preparing a coating or as an adhesive.

**Patentansprüche fur die Vertragsstaaten: BE CH DE FR GB IT LI LU NL SE**

1. Wäßrige Dispersions-Zusammensetzung, enthaltend:

(I) eine wäßrige Dispersion, die hergestellt wird durch:

(1) inniges Vermischen (a) eines Gemisches aus aromatischen Verbindungen mit Epoxygruppen und Acryloyl- und/oder Methacryloylgruppen, wobei das Gemisch im Mittel mindestens 0,5 Epoxygruppen und im Mittel 0,1 bis 1,5 Acryloyl- und/oder Methacryloylgruppen pro Molekül enthält, und (b) mindestens eines ethylenischen Monomeren, und anschließend

(2) Emulsionspolymerisieren des Gemisches in Gegenwart eines oberflächenaktiven Mittels; und

(II) einen Härter des bei Raumtemperatur härtenden Typs, ausgewählt aus Härtern auf Polyamin- oder Polysulfidbasis, der das Härten bei Raumtemperatur vollziehen kann.

2. Wäßrige Dispersions-Zusammensetzung nach Anspruch 1, die zusätzlich (III) mindestens ein Harz enthält aus der Gruppe bestehend aus Phenolharz, Terpenharz, Kolophonium, Kolophoniumesterharz und Xylolyharz.

3. Wäßrige Dispersions-Zusammensetzung nach Anspruch 2, in der das Comonomere (b) der Komponente (I) mindestens ein Alkylacrylat oder -methacrylat und gegebenenfalls, andere ethylenische Monomere enthält, und in der die Emulsions-polymerisation des Gemisches in Gegenwaart eines nichtionischen oder anionischen oberflächenaktiven Mittels durchgeführt wird; wobei die wäßrige Dispersions-Zusammensetzung als zusätzliche Komponente (IV) einen Nitril-Butadien-Kautschuk enthält.

4. Zusammensetzung nach einem der Ansprüche 1 bis 3, in der (b) Acrylsäure oder Methacrylsäure enthält.

5. Zusammensetzung nach einem der Ansprüche 1 bis 4, in der (a) durch die Reaktion eines aromatischen Epoxyharzes mit zumindest einer der Verbindungen Acrylsäure oder Methacrylsäure hergestellt wird.

6. Zusammensetzung nach einem der Ansprüche 1 bis 5, in der (a) von einem Kondensationsprodukt von Bisphenol A und Epichlorhydrin abgeleitet ist.

7. Zusammensetzung nach einem der Ansprüche 1 bis 6, in der das Gewichtsverhältnis von (a) zu (b) 90:10 bis 10:90 beträgt.

8. Zusammensetzung nach Anspruch 1, 2 oder 3, in der der Härter auf Polyaminbasis in der Menge zugegeben wird, daß der Gehalt an aktivem Wasserstoff des Härter auf Polyamin-basis 0,1 bis 2,0 Äquivalente pro Epoxygruppenäquivalent in der wäßrigen Dispersion (I) beträgt.

9. Zusammensetzung nach Anspruch 1, 2 oder 3, in der das Gemisch aus aromatischen Verbindungen im Mittel 0,4 bis 0,8 Acryloyl- oder Methacryloylgruppen pro Molekül enthält.

10. Zusammensetzung nach Anspruch 1, 2 oder 3, in der das ethylenische Monomere ungefähr 1 bis 60 Gew.-% Acrylsäure oder Methacrylsäure enthält.

11. Verwendung einer Zusammensetzung nach einem der Ansprüche 1 bis 10 zur Herstellung eines Überzugs oder als Klebemittel.

**Patentansprüche für den Vertragsstaat: AT**

1. Verfahren zur Herstellung einer wäßrigen Dispersions-Zusammensetzung, das folgende Schritte umfaßt:

(1) inniges Vermischen (a) eines Gemisches aus aromatischen Verbindungen mit Epoxygruppen und Acryloyl- und/oder Methacryloylgruppen, wobei das Gemisch im Mittel mindestens 0,5 Epoxygruppen und im Mittel 0,1 bis 1,5 Acryloyl- und/oder Methacryloylgruppen pro Molekül enthält, und (b) mindestens eines ethylenischen Monomeren, und anschließend

(2) Emulsionspolymerisieren des Gemisches in Gegenwart eines oberflächenaktiven Mittels; um eine wäßrige Dispersion (I) zu erhalten und dazu Hinzufügen (II) eines Härters des bei Raumtemperatur härtenden Typs, ausgewählt aus Härtern auf Polyamin- oder Polysulfidbasis, der das Härten bei Raumtemperatur vollziehen kann.

2. Verfahren zur Herstellung einer wäßrigen Dispersions-Zusammensetzung nach Anspruch 1, das zusätzlich zum Hinzufügen des Härters (II) das Hinzufügen (III) mindestens eines Harzes aus der Gruppe bestehend aus Phenolharz, Terpenharz, Kolophonium, Kolophoniumesterharz und Xylolharz zur wäßrigen Dispersion (I) umfaßt.

3. Verfahren nach Anspruch 2, das zusätzlich das Hinzufügen (IV) eines Nitril-Butadien-Kautschuks zu der wäßrigen Dispersion (I) umfaßt.

4. Verfahren nach einem der Ansprüche 1 bis 3, in dem (b) Acrylsäure oder Methacrylsäure enthält.

5. Verfahren nach einem der Ansprüche 1 bis 4, in dem (a) durch die Reaktion eines aromatischen Epoxyharzes mit zumindest einer der Verbindungen Acrylsäure oder Methacrylsäure hergestellt wird.

6. Verfahren nach einem der Ansprüche 1 bis 5, in dem (a) ein Kondensationsprodukt aus Bisphenol A und Ephichlorhydrin ist.

7. Verfahren nach einem der Ansprüche 1 bis 6, in der das Gewichtsverhältnis von (a) zu (b) 90:10 bis 10:90 beträgt.

8. Verfahren nach Anspruch 1, 2 oder 3, in der der Härter auf Polyaminbasis in der Menge zugegeben wird, daß der Gehalt an aktivem Wasserstoff des Härter auf Polyamin-basis 0,1 bis 2,0 Äquivalente pro Epoxygruppenäquivalent in der wäßrigen Dispersion (I) beträgt.

9. Verfahren nach Anspruch 1, 2 oder 3, in dem das Gemisch aus aromatischen Verbindungen im Mittel 0,4 bis 0,8 Acryloyl- oder Methacryloylgruppen pro Molekül enthält.

10. Verfahren nach Anspruch 1, 2 oder 3, in dem das ethylenische Monomere ungefähr 1 bis 60 Gew.-% Acrylsäure oder Methacrylsäure enthält.

11. Verwendung einer Zusammensetzung, erhalten nach dem Verfahren gemäß einem der Ansprüche 1 bis 10 zur Herstellung eines Überzugs oder als Klebemittel.

**Revendications pour les Etats contractants: BE CH DE FR GB IT LI LU NL SE**

1. Composition de dispersion aqueuse comprenant:

(I) une dispersion aqueuse qui est préparée en:

(1) mélangeant uniformenet (a) un mélange de composés aromatiques ayant des groupes époxy et des groupes acryloyles et/ou méthacryloyles, ledit mélange contenant une moyenne d'au moins 0,5 groupe époxy et une moyenne de 0,1 à 1,5 groupes acryloyles et/ou méthacryloyles par molécule, et (b) au moins un monomère d'éthylène, puis

(2) polymérisant en émulsion le mélange en présence d'un agent tensio-actif; et

(II) un durcisseur du type durcissant à température ambiante qui peut subir le durcissement à température ambiante, choisi parmi des durcisseurs à base de polyamine et de durcisseurs à base de polysulfure.

2. Composition de dispersion aqueuse selon la revendication 1, comprenant additionnellement (3) au moins une résine choisie dans le groupe consistant en un résine phénol, une résine terpène, une gomme de colophane, une résine d'ester de colophane et une résine de xylène.

3. Composition de dispersion aqueuse selon la revendication 2, où la comonomère (b) du composant (I) comprend au moins un acrylate ou méthacrylate d'alkyle et facultativement d'autres monomères d'éthylène et où ladite polymérisation en émuslion du mélange est effectuée en présence d'un agent tensio-actif non ionique ou anionique; ladite composition de dispersion aqueuse comprenant, comme autre composant (IV), une caoutchouc de nitrile butadiène.

4. Composition selon l'une quelconque des revendications 1 à 3, où (b) contient de l'acide acrylique ou de l'acide méthacrylique.

5. Composition selon l'une quelconque des revendications 1 à 4, où (a) est préparé par réaction d'une

résine époxy aromatique avec au moins l'un parmi l'acide acrylique et l'acide méthacrylique.

6. Composition selon l'une quelconque des revendications 1 à 5, où (a) est dérivé d'un condensat de bisphénol A et d'éphichlorohydrine.

7. Composition selon l'une quelconque des revendications 1 à 6, où le rapport pondéral de (a) à (b) est de 90/10 à 10/90.

8. Composition selon la revendication 1, 2 ou 3, où le durcisseur à base de polyamine est ajouté en une quantité telle que l'hydrogène actif du durcisseur à base de polyamine représente 0,1 à 2,0, équivalents par équivalent du groupe époxy dans la dispersion aqueuse (I).

9. Composition selon la revendication 1, 2 ou 3, où le mélange des composés aromatiques a une moyenne de 0,4 à 0,8 groupe acryloyle ou méthacryloyle par molécule.

10. Composition selon la revendication 1, 2 ou 3, où le monomère d'éthylène contient environ 1% à 60% en poids d'acide acrylique ou d'acide méthacrylique.

11. Utilisation d'une composition selon l'une quelconque des revendications 1 à 10 pour la préparation d'un revêtement ou en tant qu'adhésif.

**Revendications pour l'Etat contractant: AT**

1. Procédé de préparation d'une composition de dispersion aqueuse comprenant les étapes de:

(1) mélanger uniformément (a) un mélange de composés aromatiques qui ont des groupes époxy et des groupes acryloyles et/ou méthacryloyles, ledit mélange contenant une moyenne d'au moins 0,5 groupe époxy et une moyenne de 0,1 à 1,5 groupes acryloyles et/ou méthacryloyles par molécule, et (b) au moins un monomère d'éthylène, puis

(2) polymériser en émulsion le mélange en présence d'un agent tensio-actif pour obtenir une dispersion aqueuse (I) et y ajouter (II) un durcisseur du type durcissant à température ambiante qui peut subir le durcissement à température ambiante, choisi parmi des durcisseurs à base de polyamine et de durcisseurs à base de polysulfure.

2. Procédé de préparation d'une composition de dispersion aqueuse selon la revendication 1 qui consiste à ajouter à la dispersion aqueuse (I), en plus du durcisseur (II), (III) au moins un résine choisie dans le groupe consistant en une résine phénol, une résine terpène, une gomme de colophane, une résine d'ester de colophane et une résine de xylène.

3. Procédé selon la revendication 2, qui consiste à ajouter, de plus, (IV) un caoutchouc de nitrile-butadiène, à la dispersion aqueuse (I).

4. Procédé selon l'une quelconque des revendications 1 à 3, où (b) contient de l'acide acrylique ou de l'acide méthacrylique.

5. Procédé selon l'une quelconque des revendications 1 à 4, où (a) est préparé par réaction d'une résine époxy aromatique avec au moins un acide acrylique et un acide méthacrylique.

6. Procédé selon l'une quelconque des revendications 1 à 5, où (a) est condensat de bisphénol A et d'épichlorohydrine.

7. Procédé selon l'une quelconque des revendications 1 à 6, où le rapport pondéral de (a) à (b) est de 90/10 à 10/90.

8. Procédé selon la revendication 1, 2, ou 3, où le durcisseur à base de polyamine est ajouté en une quantité telle que l'hydrogène actif du durcisseur à base de polyamine soit de 0,1 à 2,0, équivalents par équivalent du groupe époxy dans la dispersion aqueuse (I).

9. Procédé selon la revendication 1, 2, ou 3, où le mélange des composés aromatiques a une moyenne de 0,4 à 0,8 groupe acryloyle ou méthacryloyle par molécule.

10. Procédé selon la revendication 1, 2, ou 3, où le monomère d'éthylène contient environ 1% à 60% en poids d'acide acrylique ou d'acide méthacrylique.

11. Utilisation d'une composition telle que préparée par le procédé selon l'une quelconque des revendications 1 à 10 pour la préparation d'un revêtement ou en tant qu'adhésif.